# EUROPEAN PATENT SPECIFICATION

(11) **EP 2 021 275 B1**
(45) Date of publication and mention of the grant of the patent: **23.03.2011**
(21) Application number: 07724740.1
(22) Date of filing: 30.04.2007
(51) Int. Cl.: C01B 7/07

(54) **ENHANCED PROCESS FOR THE PURIFICATION OF ANYHYDROUS HYDROGEN CHLORIDE GAS**
VERBESSERTES VERFAHREN ZUR REINIGUNG VON WASSERFREIEM CHLORWASSERSTOFFGAS
PROCÉDÉ AMÉLIORÉ DE PURIFICATION DE CHLORURE D'HYDROGÈNE ANHYDRE GAZEUX

(30) Priority: 12.05.2006 US 433809
(43) Date of publication of application: 11.02.2009
(73) Proprietor: Bayer MaterialScience AG, 51368 Leverkusen (DE); Bayer MaterialScience LLC, Pittsburgh, PA 15205-9741 (US)
(72) Inventor: BOONSTRA, Eric, F., Baytown, TX 775520 (US); TEEPE, John, M., Baytown, TX 77520 (US); VANDEKEMP, Renae, M., Beaumont, TW 77707-6402 (US); HIELSCHER, Anke, 51373 Leverkusen (DE); HALLENBERGER, Kaspar, 51375 Leverkusen (DE)
(74) Representative: Bramer-Weger, Elmar
(86) International application number: PCT/EP2007/003813
(87) International publication number: WO 2007/131623

(56) References cited:
- EP-A- 1 149 861
- WO-A-2004/056758
- GB-A- 2 140 014
- US-A- 4 935 220
- US-B2- 6 719 957

## Description

### BACKGROUND OF THE INVENTION

The present invention relates to a process for purifying anhydrous hydrogen chloride gas ("aHCl"), and preferably the anhydrous hydrogen chloride gas recovered from an isocyanate production process. In the process of the present invention, the content of chlorinated organics may be reduced from up to 1000 ppm by volume to below 10 ppb by volume levels. Generally, the process of the invention allows for chlorinated organic levels to be reduced to from 1 to 100 ppb, rendering the treated hydrogen chloride gas usable in a catalytic oxychlorination process or a Deacon process. The treated gas is also suitable for absorption in water or dilute hydrochloric acid.

A number of important chemical processes generate aHCl as a byproduct. Examples of such processes include chlorination processes, silane production processes and phosgenation processes. Because large amounts of aHCl can not be disposed of, one of the challenges encountered with each of these processes is purification of the aHCl generated to obtain a usable technical product or raw material for other processes. Several processes for purifying aHCl generated during production processes have been proposed. Thermal treatment of the aHCl at temperatures of up to 800 to 1600°C is disclosed in U.S. Patent 5,126,119. Full condensation and distillation under elevated pressure is disclosed in U.S. Patent 4,935,220. The processes disclosed in these patents require high amounts of energy and expensive equipment.

Treatment of aHCl at pressures of 5 to 20 bar absolute and final temperatures below -20°C is disclosed in U.S. Patent 6,719,957. The process disclosed in the '957 patent results in contaminant levels occasionally unacceptable for use in vinyl chloride production. The contaminant level achieved is always unacceptable for use in Deacon processes.

In the commercial phosgenation processes for the production of isocyanates such as TDI (toluene diisocyanate, MDI (diphenylmethane diisocyantes) and HDI (hexamethylen diiscocyanate), two moles of aHCl are formed per isocyanate group produced. This large quantity of by-product must be used in a secondary process.

One such secondary process is the production of muriatic acid. However, the volume of HCl byproduct produced often exceeds the market demand. Another alternative is to use the aHCl in a catalytic oxychlorination process with ethylene to produce ethylene dichloride and finally vinyl chloride as the commercial product. This catalytic process is very sensitive to traces of organic compounds, particularly (chloro-) aromatic compounds which can deactivate the catalyst employed.

Another secondary process is the Deacon process, which produces chlorine and water by passing gaseous HCl and oxygen over a transition metal catalyst. This process is very sensitive to traces of some contaminants, such as sulfur and some organic compounds, which over time can lead to catalyst deactivation and/or plugging of reactors which in turn can lead to unwanted by-product formation.

The most commonly used solvents in isocyanate production are chlorobenzene and dichlorobenzene (See G. Oertel, Polyurethane Handbook, page 66 (Carl Hanser Verlag, Munich (1985)). The aHCl recovered from the phosgenation process is saturated with these chloro-aromatics. Deep chilling of the aHCl gas can reduce the chloro-aromatic content, but not to the necessary level. Another complicating factor is the high melting point of dichlorobenzene (o-isomer: -17.5°C, p-isomer: +52.8°C), which limits the usefulness of this approach. Low pressure phosgenation processes such as those described in G. Oertel, Polyurethane Handbook, p. 66 (Carl Hanser Verlag, Munich (1985)), which yield aHCl gas at pressure ranging from atmospheric to below 5 bar, will, even with deep chilling, contain chloro-aromatics in a concentrations of from several hundred ppm to 1000 ppm.

The present invention has several objects: i) a process for the removal of one or more contaminants from hydrogen chloride gas, ii) a process for separating small quantities of high boiling material, e.g., (chloro) aromatic compounds from large volumes of anhydrous HCl gas; and, iii) a process for reducing the concentration of contaminants such as (chloro)aromatic compounds in anhydrous HCl gas to <100 ppb.

### BRIEF DESCRIPTION OF THE DRAWINGS

Figure 1 schematically illustrates a flow diagram for the present invention.
Figure 2 schematically illustrates a second embodiment of the present invention.
Figure 3 schematically illustrates a preferred embodiment of the present invention.

### DETAILED DESCRIPTION OF THE INVENTION

The present invention is broadly directed to a cooling and distillation process to remove contaminants having boiling points higher than hydrogen chloride from a hydrogen chloride-containing gas comprising:
a) compressing said hydrogen chloride-containing gas,
b) cooling the resultant compressed gas in a first heat exchanger resulting in a first condensate stream and a first gas stream, wherein said compressed gas is cooled to a temperature low enough to partially condense said contaminants and at a rate sufficiently low that fog formation is prevented,
c) feeding said first gas stream from said first heat exchanger to a distillation column having a top portion and a bottom portion to a point between said top portion and said bottom portion, to cause mass transfer between liquid and gas and to thereby concentrate the contaminants in the bottom portion of said column and hydrogen chloride gas in the top portion of said column,
d) feeding said hydrogen chloride gas from said top portion to a second heat exchanger whereby the hydrogen chloride gas is partially condensed to form a second condensate stream and a second gas stream,
e) feeding said second condensate stream to said top portion of said column to provide reflux to said column,
f) feeding said first condensate stream to said distillation column below the point where said first gas stream is fed,
g) feeding said second gas stream from step d) to said first heat exchanger as cooling medium,
h) recovering purified hydrogen chloride gas from said first heat exchanger, and
i) feeding said contaminants from the bottom portion of said column to a collection vessel.

In the compression step (step a)), the gas is preferably compressed to a pressure of from 5 to 30 bars absolute.

The contaminants contained in the gas stream are preferably chlorinated aromatic compounds. In one preferred embodiment, the gas stream also contains a contaminant with an intermediate boiling range between the hydrogen chloride boiling point and the chlorinated aromatic compound boiling point. The intermediate contaminant is removed from the distillation column, is subsequently depressurized, and is discarded. In one especially preferred embodiment, the intermediate contaminant is phosgene.

In the cooling step (step b)), the incoming contaminated gas is cooled slowly. The temperature difference between the cooling wall of the first heat exchanger and the inlet gas temperature is preferably between 0.5 and 40°C, and most preferably in the range of from 5 to 25° C. The temperature of the compressed gas is preferably reduced to a temperature of from +10 to -25°C in the cooling step (step b)).

In one embodiment of the invention, in step f), the condensate stream (of step b)) is fed to a separation vessel (or vessels) used to trap solids. If multiple vessels are used, one vessel can be used to collect solids while overflowing condensate from the vessel being fed to the distillation column at a point below the point where the first gas stream is fed, while the other vessel is depressurized to enable collected solids to be purged to waste.

In another preferred embodiment, step e) comprises:
e1) feeding said second condensate stream to one or more separation vessels used to trap any solids present and to form a solids stream and a third condensate stream,
e2) feeding said third condensate stream to said top portion of said column to provide reflux to said column.

The solids collected in the solids stream can be purged to waste.

In an other preferred embodiment, step i) comprises i1) feeding liquid from the bottom portion of said column to a reboiler to generate stripping vapors for the bottom portion of the column, and wherein the reboiler heats the said liquid at low heat flux so as to prevent foaming action and i2) removing any remaining liquid from the reboiler to a collection vessel for disposal. Preferably, from 5% to 95% of the liquid reaching the reboiler is evaporated. Most preferably, the reboiler design prevents the formation of foams and has a heat flux of from 5674.5 kJ/(m²h) (500 BTU/hr/ft²) to 226980 kJ/(m²h) (20000 BTU/hr/ft²) as a lower limit and from 34047 kJ/(m²h) (3000 BTU/hr/ft²) to 340470 kJ/(m²h) (30000 BTU/hr/ft²) as a higher limit. In any even more preferred embodiment, a portion of the liquid removed from the reboiler comprises hydrogen chloride and contaminants and is sprayed into the gas stream being fed to the first heat exchanger, most preferably in amount of from 1 to 25% by weight of the weight of the incoming gas stream.

The temperature of the gas being fed into the distillation column is preferably reduced to a temperature of from 0 to -35°C during the distillation step.

In another preferred embodiment, the purified hydrogen chloride gas from the first heat exchanger is further purified by treatment with activated charcoal.

In a second broad embodiment, the invention comprises
a) compressing said hydrogen chloride-containing gas,
b) cooling the resultant compressed gas in a first heat exchanger resulting in a first condensate stream and a first gas stream, wherein said compressed gas is cooled to a temperature low enough to partially condense said contaminants and at a rate sufficiently low that fog formation is prevented,
c) feeding said first gas stream from said first heat exchanger to a distillation column having a top portion and a bottom portion to a point between said top portion and said bottom portion, to cause mass transfer between liquid and gas and to thereby concentrate the contaminants in the bottom portion of said column and hydrogen chloride gas in the top portion of said column,
d) feeding said hydrogen chloride gas from said top portion to one side of a third heat exchanger and feeding said contaminants from the bottom portion of said column to the other side of said third heat exchanger to flash against and cool the hydrogen chloride gas passing through said third heat exchanger, whereby the following streams are formed:
   1) a second gas stream containing contaminants,
   2) a contaminant stream,
   3) a third cooled gas stream, and
   4) a second condensate stream,
e) feeding said third gas stream to a second heat exchanger whereby the hydrogen chloride gas is partially condensed to form a third condensate stream and a fourth gas stream,
f) combining said second condensation stream and said third condensation stream and feeding the resulting combined stream to said top portion of said column to provide reflux to said column,
g) feeding said first condensate stream to said distillation column below the point where said first gas stream is fed,
h) feeding said fourth gas stream from step d) to said first heat exchanger as cooling medium, and
i) recovering purified hydrogen chloride gas from said first heat exchanger.

In addition, any of the various preferred parameters and embodiments described above can be used with this second broad embodiment. For example, in step g), the condensate stream (of step b)) can be fed to a separation vessel (or vessels) used to trap solids. If multiple vessels are used, one vessel can be used to collect solids while overflowing condensate from the vessel being fed to the distillation column at a point below the point where the first gas stream is fed, while the other vessel is depressurized to enable collected solids to be purged to waste. Additionally, step f) can comprise:
f1) combining said second condensation stream and said third condensation stream,
f2) feeding the combined condensate stream to one or more separation vessels used to trap any solids present and to form a solids stream and a fourth condensate stream, and
f3) feeding said fourth condensate stream to said top portion of said column to provide reflux to said column.

The solids collected in the solids stream can be purged to waste. Similarly, the column can be provided with a reboiler, with the liquid from the reboiler being fed to the flasher. A portion of the liquid removed from the reboiler which contains hydrogen chloride and contaminants can be sprayed into the gas stream being fed to the first heat exchanger.

By following the present invention, fog (or aerosol) formation is avoided by controlling the cooling rate of the incoming gas, and by the use of a condensate spray to promote more homogeneous cooling.

The present invention provides an enhanced method of purifying a contaminated hydrogen chloride stream by using a modifieo cooling and distillation process. Small quantities of high boiling contaminants, e.g. chlorinated aromatic hydrocarbons, can be removed down to a concentration of 10 ppb in the purified gas. In particular, this process works well for purifying byproduct streams created by isocyanate production processes, which coproduce with the isocyanate, large volumes of anhydrous hydrogen chloride gas with contaminants including monochlorobenzene and dichlorobenzenes (ortho, meta and para isomers).

The process of the invention will now be further described with reference to the drawings. Numerals and letters in the drawings refer to the same devices and streams.

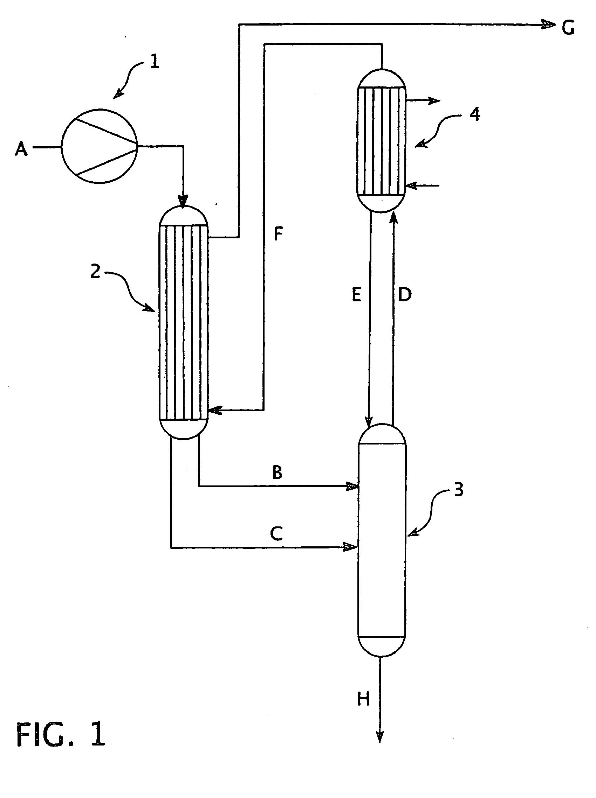

As shown in Figure 1, the contaminated hydrogen chloride gas (shown as stream A) enters compressor 1, exits the compressor and enters the first heat exchanger 2. As it passes through the first heat exchanger, the compressed gas is cooled to a temperature low enough to partially condense the contaminants and at a rate sufficiently low that fog formation is prevented. Two streams flow from the first heat exchanger a first condensate stream C and a first gas stream B. The first gas stream B is fed to a distillation column 3 at a point between the top and bottom of the column. In the distillation column, mass transfer occurs between liquid and gas, with the contaminants being concentrated in the bottom portion of the column, and hydrogen chloride gas being concentrated in the lower portion of the column. The hydrogen chloride gas is fed (stream D) from the top portion of the column to a second heat exchanger 4 (that is provided with an appropriate coolant via stream shown in the figure as arrows entering one side of the exchanger and exiting on the other side) wherein the gas is partially condensed to form a second condensate stream E and a second gas stream F. The second condensate stream E is fed back to the top portion of the column to provide reflux to the column. The first condensate stream C is fed to the column at a point below the first gas stream B is fed. The second gas stream F is fed back to the first heat exchanger as cooling medium. Purified hydrogen chloride gas is recovered via stream G from the first heat exchanger and the liquid bottoms (that contain concentrated contaminants) of the column are fed via stream H to a collection vessel (not shown) for subsequent disposal.

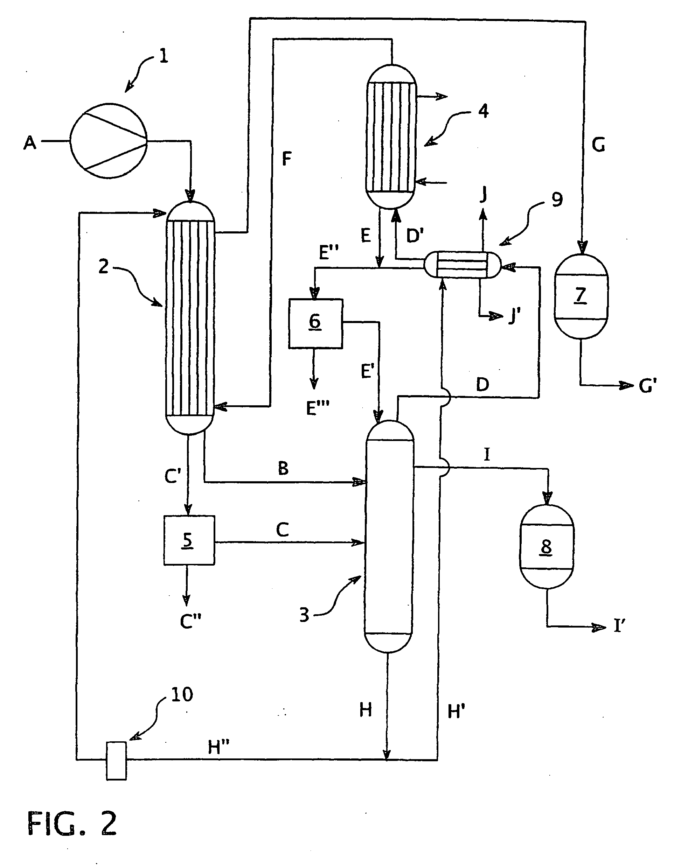

The configuration in Figure 2 is similar to that in Figure 1 with several added improvements shown. Figure 2 illustrates the process as if all the improvements were used. Of course, the artisan will recognize that not all the improvements must be used. As shown, the inlet gas stream A enters compressor 1 exits the compressor and enters the first heat exchanger 2. As it passes through the first heat exchanger, the compressed gas is cooled to a temperature low enough to partially condense the contaminants and at a rate sufficiently low that fog formation is prevented. Two streams flow from the first heat exchanger a first condensate stream C and a first gas stream B. The first gas stream B is fed to a distillation column 3 at a point between the top and bottom of the column. In the distillation column, mass transfer occurs between liquid and gas, with the contaminants being concentrated in the bottom portion of the column, and hydrogen chloride gas being concentrated in the lower portion of the column. The condensate from the first heat exchanger flows (stream C') into a solids trapping vessel 5. If more than one vessel is used, they may be used interchangeably. In the separation vessel two streams result, a solids stream C" that can be collected and purged to waste and a third condensate stream C. The third condensate stream (without solids) C is fed as a liquid feed to the distillation column at a point below the point where the first gas stream is fed.

The concentrated hydrogen chloride gas from the top portion of the column is fed via stream D to a third heat exchanger 9. The bottoms stream H from the distillation column can be split into two streams, H' and H" which contain concentrated amounts of the contaminants. The H" stream can be pumped via pump 10 back into the inlet of the HCl gas entering the first heat exchanger. The H' stream can be flashed against the concentrated hydrogen chloride gas entering the third heat exchanger. This step can result in several streams - i) a gas stream J containing hydrogen chloride (at a lower pressure) and, in the case of a starting gas from an isocyanate production facility, phosgene (this stream can be collected and used again in another appropriate process), ii) a stream J' containing mainly organic contaminants (that are then collected and disposed), iii) a gas stream D' that is fed to the second heat exchanger 4 and iv) a condensate stream E". Stream E" can be combined with the second condensate stream E and fed to the top portion of the column 3 to provide reflux to the column. Alternatively, stream E" can be combined with the second condensate stream E and fed to a collection vessel 6 where solids are collected and discarded via stream E"' with the overflow condensate from the collection vessel being fed via stream E' back to the top portion of the column 3 to provide reflux to the column. The second gas stream F is fed back to the first heat exchanger as cooling medium.

Figure 2 also shows a side draw-off stream I from the distillation column to remove intermediate boiling contaminants. This stream can be fed to an activated charcoal bed 8 to remove organics, resulting in stream I' which is led off to disposal.

Figure 2 also shows purified gas stream G being fed to an activated charcoal bed 7, resulting in a stream G' of purified hydrogen chloride gas.

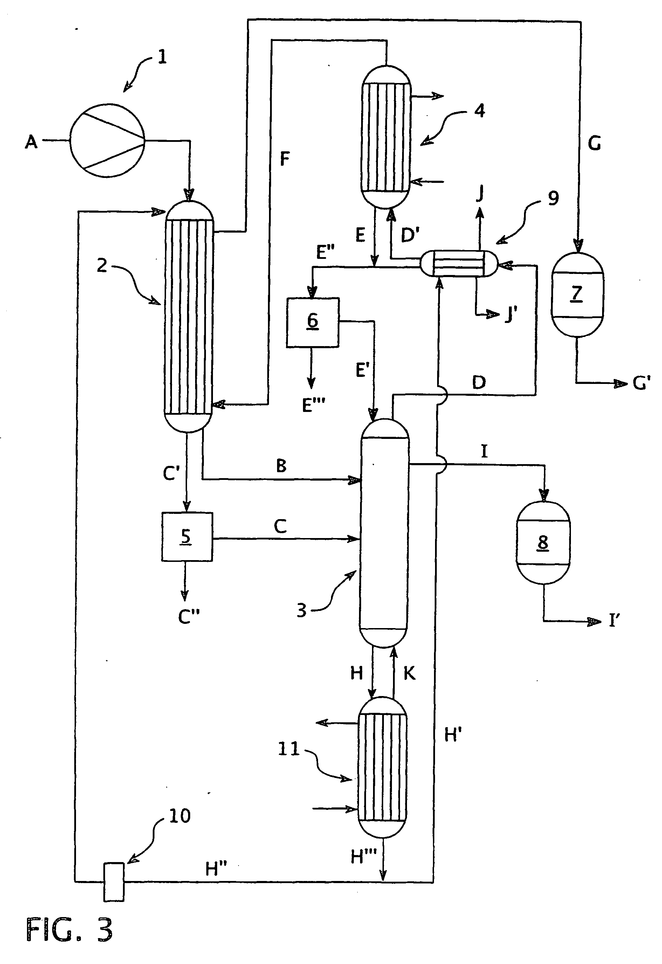

The embodiment shown in Figure 3 is identical to that shown in Figure 2, except that the bottom liquids of the distillation column are fed via stream H to a reboiler 11 (that is provided with an appropriate coolant via stream shown in the figure as arrows entering one side of the exchanger and exiting on the other side) to generate stripping vapors that are fed via stream K to the bottom portion of the column. The reboiler heats the bottoms liquid at low heat flux to prevent foaming action. The condensate stream H"' from the reboiler can either be collected and discarded or can be sent to either the third heat exchanger (stream H') or back to the inlet of the first heat exchanger (stream H").

The compressor A can be of any kind of equipment capable of increasing the pressure to from about of 5 to 30 bar absolute and preferably above 12 bar absolute. Preferred compressors include piston compressors, screw compressors, optionally with oil injection, and centrifugal compressors. The final pressure of the gas must be adjusted so as to overcome the pressure drop in overall system.

Once compressed, the gas enters the first heat exchanger at which point gas condensate spray mixes with the incoming gas in the amount of five to twenty-five weight percent of the total amount of incoming gas. Some condensation from this first heat exchanger can flow into solids collection vessel(s) to catch solids. The liquid condensate from these vessel(s) overflows and is fed to the distillation column.

The heat exchangers used in the present invention can be of any type. Shell and tube heat exchangers are preferred.

HCl offgas from isocyanate units containing monochlorobenzene, dichloro-benzene, and chlorinated methanes impurities are preferably used as the initial gas. The gas is compressed to a pressure of 8 to 20 bar, preferably 12 bar. The resulting compressed gas is fed to the first heat exchanger for cooling to between - 5 and - 20°C, preferably -10°C, to partially condense impurities. The condensed impurities are preferably first passed through a solids collection vessel to remove any solids and then led to the distillation column as liquid feed. The gas stream from the first heat exchanger is fed to the distillation column as gaseous feed. Overhead vapors from the distillation column pass through a second heat exchanger and are cooled to between -18 and -30°C (preferably -25°C) to partially condense between 0.01 and 25 %, preferably between 2 to 5%, of the inlet vapor stream to provide liquid reflux for the distillation column. The purified HCl gas from the second heat exchanger are pumped back to the inlet gas stream to be injected like a spray to promote condensation in the inlet gas and to prevent the formation of an aerosol or fog. The partially purified gas now has a concentration of from 0.1 to 100, and preferably 1 to 10 ppm organic impurities.

The partially purified HCl gas can then be fed to an activated charcoal adsorption column for final purification to reach a final organic impurities level of from 10 to 1000 ppb, preferably from 50 to 100 ppb.

The bottom stream of the distillation column contains most of the impurities and is allowed to flash to a lower pressure of between 1 bar and 10 bar, preferably 1.05 bar where much of the remaining HCl flashes off and is led off to an absorption step or to waste. The remaining residue, containing most of the impurities, is led off to incineration or other waste treatment. The cooling effect of the bottoms stream flash can help to cool the vapors leaving from the top of the column.

If desired, a reboiler (preferable operation between -10 and +8°C) is provided to return most of the condensed HCl as vapor back to the column as stripping gas. The design of the reboiler preferably uses a heat flux of between 11349 kJ/(m²h) (1000 BTU/hr/ft²) and 136190 kJ/(m²h) (12000 BTU/hr/ft²) and preferably between 28372 kJ/(m²h) (2500 BTU/hr/ft²) and 45396 kJ/(m²h) (4000 BTU/hr/ft²).

## Claims

1. A cooling and distillation process to remove contaminants having boiling points higher than hydrogen chloride from a hydrogen chloride-containing gas comprising:
a) compressing said hydrogen chloride-containing gas,
b) cooling the resultant compressed gas in a first heat exchanger resulting in a first condensate stream and a first gas stream, wherein said compressed gas is cooled to a temperature low enough to partially condense said contaminants and at a rate sufficiently low that fog formation is prevented,
c) feeding said first gas stream from said first heat exchanger to a distillation column having a top portion and a bottom portion to a point between said top portion and said bottom portion, to cause mass transfer between liquid and gas and to thereby concentrate the contaminants in the bottom portion of said column and hydrogen chloride gas in the top portion of said column,
d) feeding said hydrogen chloride gas from said top portion to a second heat exchanger whereby the hydrogen chloride gas is partially condensed to form a second condensate stream and a second gas stream,
e) feeding said second condensate stream to said top portion of said column to provide reflux to said column,
f) feeding said first condensate stream to said distillation column below the point where said first gas stream is fed,
g) feeding said second gas stream from step d) to said first heat exchanger as cooling medium,
h) recovering purified hydrogen chloride gas from said first heat exchanger, and
i) feeding said contaminants from the bottom potion of said column to a collection vessel.

2. The process of Claim 1, wherein the contaminants contained in the gas stream are chlorinated aromatic compounds.

3. The process of Claim 2, wherein the gas stream also contains a contaminant with an intermediate boiling range between the hydrogen chloride boiling point and the chlorinated aromatic compound boiling point.

4. The process of Claim 3 wherein said intermediate is phosgene and said intermediate is removed from said distillation column.

5. The process of Claim 1 wherein the temperature of the compressed gas is reduced to a temperature of from +10 to -25°C in said first heat exchanger.

6. The process of Claim 1 wherein in step a), the gas is compressed to a pressure of from 5 to 30 bars absolute.

7. The process of Claim 1, wherein step f) comprises
f1) feeding said first condensate to a separation vessel (or vessels) to trap solids and wherein a solids stream and an overflow condensate stream are formed,
f2) feeding said overflow condensate stream to said distillation column at a point below the point where the first gas stream is fed.

8. The process of Claim 1, wherein step e) comprises:
e1) feeding said second condensate stream to one or more separation vessels used to trap any solids present and to form a solids stream and a third condensate stream,
e2) feeding said third condensate stream to said top portion of said column to provide reflux to said column.

9. The process of Claim 1 wherein step i) comprises
i1) feeding liquid from the bottom portion of said column to a reboiler to generate stripping vapors for the bottom portion of the column, and wherein the reboiler heats the said liquid at low heat flux so as to prevent foaming action and
i2) removing any remaining liquid from the reboiler to a collection vessel for disposal.

10. The process of Claim 9, wherein the reboiler is designed to prevent the formation of foam and has a heat flux of from 5674.5 kJ/(m²h) (500 BTU/hr/ft²) to 226980 kJ/(m²h) (2000 BTU/hr/ft²) as a lower limit and from 34047 kJ/(m²h) (3000 BTU/hr/ft²) to 340470 kJ/(m²h) (30000 BTU/hr/fr/ft²) as a higher limit.

11. The process of Claim 9, wherein a portion of the liquid removed from the reboiler comprises hydrogen chloride and contaminants and is sprayed into the gas stream being fed to the first heat exchanger.

12. The process of Claim 9, wherein from 5 to 95% by weight the liquid fed to said reboiler is evaporated.

13. The process of Claim 1, wherein the purified hydrogen chloride gas from the first heat exchanger is further purified by treatment with activated charcoal.

14. A cooling and distillation process to remove contaminants having boiling points higher than hydrogen chloride from a hydrogen chloride-containing gas comprising:
a) compressing said hydrogen chloride-containing gas,
b) cooling the resultant compressed gas in a first heat exchanger resulting in a first condensate stream and a first gas stream, wherein said compressed gas is cooled to a temperature low enough to partially condense said contaminants and at a rate sufficiently low that fog formation is prevented,
c) feeding said first gas stream from said first heat exchanger to a distillation column having a top portion and a bottom portion to a point between said top portion and said bottom portion, to cause mass transfer between liquid and gas and to thereby concentrate the contaminants in the bottom portion of said column and hydrogen chloride gas in the top portion of said column,
d) feeding said hydrogen chloride gas from said top portion to one side of a third heat exchanger flasher and feeding said contaminants from the bottom portion of said column to the other side of said third heat exchanger to flash against and cool the hydrogen chloride gas passing through said third heat exchanger, whereby the following streams are formed:
1) a second gas stream containing contaminants,
2) a contaminant stream,
3) a third cooled gas stream, and
4) a second condensate stream,
e) feeding said third gas stream to a second heat exchanger whereby the hydrogen chloride gas is partially condensed to form a third condensate stream and a fourth gas stream,
f) combining said second condensation stream and said third condensation stream and feeding the resulting combined stream to said top portion of said column to provide reflux to said column,
g) feeding said first condensate stream to said distillation column below the point where said first gas stream is fed,
h) feeding said fourth gas stream from step d) to said first heat exchanger as cooling medium, and
i) recovering purified hydrogen chloride gas from said first heat exchanger.

## Patentansprüche

1. Kühl- und Destillationsverfahren zur Entfernung von Verunreinigungen mit Siedepunkten, die höher als der von Chlorwasserstoff sind, aus einem Chlorwasserstoff enthaltenden Gas, umfassend:
a) Komprimieren des Chlorwasserstoff enthaltenden Gases;
b) Kühlen des resultierenden komprimierten Gases in einem ersten Wärmetauscher, was zu einem ersten Kondensatstrom und einem ersten Gasstrom führt, wobei das komprimierte Gas auf eine Temperatur gekühlt wird, die niedrig genug ist, um die Verunreinigungen teilweise zu kondensieren, und mit einer Rate, die niedrig genug ist, damit eine Nebelbildung verhindert wird;
c) Zuführen des ersten Gasstroms von dem ersten Wärmetauscher in eine Destillationssäule mit einem Oberteil und einem Bodenteil zu einem Punkt zwischen dem Oberteil und dem Bodenteil, um eine Massenübertragung zwischen Flüssigkeit und Gas zu bewirken und um **dadurch** die Verunreinigungen im Bodenteil der Säule und Chlorwasserstoffgas im Oberteil der Säule zu konzentrieren;
d) Zuführen des Chlorwasserstoffgases vom Oberteil zu einem zweiten Wärmetauscher, wodurch das Chlorwasserstoffgas teilweise kondensiert wird unter Bildung eines zweiten Kondensatstroms und eines zweiten Gasstroms;
e) Zuführen des zweiten Kondensatstroms in den Oberteil der Säule, um in der Säule für einen Rückfluss zu sorgen;
f) Zuführen des ersten Kondensatstroms in die Destillationssäule unterhalb des Punktes, wo der erste Gasstrom zugeführt wird;
g) Zuführen des zweiten Gasstroms von Schritt d) zu dem ersten Wärmetauscher als Kühlmedium;
h) Rückgewinnen von gereinigtem Chlorwasserstoffgas aus dem ersten Wärmetauscher; und
i) Zuführen der Verunreinigungen aus dem Bodenteil der Säule zu einem Sammelgefäß.

2. Verfahren gemäß Anspruch 1, wobei die in dem Gasstrom enthaltenen Verunreinigungen chlorierte aromatische Verbindungen sind.

3. Verfahren gemäß Anspruch 2, wobei der Gasstrom auch eine verunreinigung mit einem intermediärem Siedebereich zwischen dem Chlorwasserstoff-Siedepunkt und dem Siedepunkt von chlorierter aromatischer Verbindung enthält.

4. Verfahren gemäß Anspruch 3, wobei das Intermediat Phosgen ist und das Intermediat aus der Destillationssäule entfernt wird.

5. Verfahren gemäß Anspruch 1, wobei die Temperatur des komprimierten Gases auf eine Temperatur von +10 bis -25°C in dem ersten Wärmetauscher verringert wird.

6. Verfahren gemäß Anspruch 1, wobei im Schritt a) das Gas auf einen Druck von 5 bis 30 Bar absolut komprimiert wird.

7. Verfahren gemäß Anspruch 1, wobei der Schritt f) Folgendes umfasst:
f1) Zuführen des ersten Kondensats in einen (oder mehrere) Abscheidebehälter, um Feststoffe einzufangen, und wobei sich ein Feststoffstrom und ein Überlaufkondensatstrom bilden;
f2) Zuführen des Überlaufkondensatstroms zu der Destillationssäule an einem Punkt unterhalb des Punktes, wo der erste Gasstrom zugeführt wird.

8. Verfahren gemäß Anspruch 1, wobei der Schritt e) Folgendes umfasst:
e1) Zuführen des zweiten Kondensatstroms in einen oder mehrere Abscheidebehälter, die zum Einfangen jeglicher vorhandener Feststoffe und zur Bildung eines Feststoffstroms und einen dritten Kondensatstroms verwendet werden;
e2) Zuführen des dritten Kondensatstroms in den Oberteil der Säule, um für einen Rückfluss in die Säule zu sorgen.

9. Verfahren gemäß Anspruch 1, wobei der Schritt i) Folgendes umfasst:
i1) Zuführen von Flüssigkeit vom Bodenteil der Säule in einen Reboiler, um Strippingdämpfe für den Bodenteil der Säule zu erzeugen, und wobei der Reboiler die Flüssigkeit bei geringem Wärmefluss erwärmt, um eine Aufschäumwirkung zu verhindern, und
i2) Entfernen von jeglicher Restflüssigkeit aus dem Reboiler in einen Sammelbehälter zur Entsorgung.

10. Verfahren gemäß Anspruch 9, wobei der Reboiler so ausgelegt ist, um die Bildung von Schaum zu verhindern, und der einen Wärmefluss von 5674,5 kJ/(m²h) (500 BTU/h/ft²) bis 226980 kJ/(m²h) (20000 BTU/h/ft²) als Untergrenze und von 34047 kJ/(m²h) (3000 BTU/h/ft²) bis 340470 kJ/(m²h) (30000 BTU/h/ft²) als Obergrenze aufweist.

11. Verfahren gemäß Anspruch 9, wobei ein Teil der aus dem Reboiler entfernten Flüssigkeit Chlorwasserstoff und Verunreinigungen umfasst und in den Gasstrom, welcher in den ersten Wärmetauscher eingespeist wird, gesprüht wird.

12. Verfahren gemäß Anspruch 9, wobei 5 bis 95 Ges.-% der in den Reboiler eingespeisten Flüssigkeit verdampft werden.

13. Verfahren gemäß Anspruch 1, wobei das gereinigte Chlorwasserstoffgas aus dem ersten Wärmetauscher durch Behandlung mit Aktivkohle weiter gereinigt wird.

14. Kühl- und Destillationsverfahren zur Entfernung von Verunreinigungen mit Siedepunkten, die höher sind als der von Chlorwasserstoff, aus einem Chlorwasserstoff enthaltenden Gas, umfassend:
a) Komprimieren des Chlorwasserstoff enthaltenden Gases;
b) Kühlen des resultierenden komprimierten Gases in einem ersten Wärmetauscher, was zu einem ersten Kondensatstrom und einem ersten Gasstrom führt, wobei das komprimierte Gas auf eine Temperatur gekühlt wird, die niedrig genug ist, um die Verunreinigungen teilweise zu kondensieren, und mit einer Rate, die niedrig genug ist, damit eine Nebelbildung verhindert wird;
c) Zuführen des ersten Gasstroms von dem ersten Wärmetauscher in eine Destillationssäule mit einem Oberteil und einem Bodenteil zu einem Punkt zwischen dem Oberteil und dem Bodenteil, um eine Massenübertragung zwischen Flüssigkeit und Gas zu bewirken und um **dadurch** die Verunreinigungen im Bodenteil der Säule und Chlorwasserstoffgas im Oberteil der Säule zu konzentrieren;
d) Zuführen des Chlorwasserstoffgases aus dem Oberteil zu einer Seite eines dritten Wärmetauscher-Flashers und Zuführen der Verunreinigungen vom Bodenteil der Säule zu der anderen Seite des dritten Wärmetauschers, um das durch den dritten Wärmetauscher strömende Chlorwasserstoffgas zu flashen und zu kühlen, wobei die folgenden Ströme gebildet werden:
1) ein zweiter Gasstrom, der Verunreinigungen enthält,
2) ein Strom von Verunreinigungen,
3) ein dritter gekühlter Gasstrom, und
4) ein zweiter Kondensatstrom;
e) Zuführen des dritten Gasstroms zu einem zweiten Wärmetauscher, wobei das Chlorwasserstoffgas teilweise kondensiert wird unter Bildung eines dritten Kondensatstroms und eines vierten Gasstroms;
f) Vereinigen des zweiten Kondensationsstroms und des dritten Kondensationsstroms und Zuführen des resultierenden vereinigten Stroms in den Oberteil der Säule, um für einen Rückfluss in die Säule zu sorgen;
g) Zuführen des ersten Kondensatstroms in die Destillationssäule unterhalb des Punktes, wo der erste Gasstrom eingespeist wird;
h) Zuführen des vierten Gasstroms von Schritt d) in den ersten Wärmetauscher als Kühlmedium; und
i) Rückgewinnen von gereinigtem Chlorwasserstoffgas von dem ersten Wärmetauscher.

## Revendications

1. Procédé de refroidissement et de distillation pour éliminer des contaminants présentant des points d'ébullition supérieurs au chlorure d'hydrogène à partir d'un gaz contenant du chlorure d'hydrogène comprenant :
a) la compression dudit gaz contenant du chlorure d'hydrogène,
b) le refroidissement du gaz comprimé résultant dans un premier échangeur de chaleur, résultant en un premier flux de condensat et en un premier flux de gaz, où ledit gaz comprimé est refroidi à une température suffisamment basse pour condenser partiellement lesdits contaminants et à une vitesse suffisamment basse pour prévenir la formation de brouillard,
c) l'alimentation dudit premier flux de gaz dudit premier échangeur de chaleur dans une colonne de distillation présentant une portion supérieure et une portion de fond en un point entre ladite portion supérieure et ladite portion de fond, pour provoquer un transfert de masse entre le liquide et le gaz et pour ainsi concentrer les contaminants dans la portion de fond de ladite colonne et le chlorure d'hydrogène gazeux dans la portion supérieure de ladite colonne,
d) l'alimentation dudit chlorure d'hydrogène gazeux provenant de ladite portion supérieure dans un deuxième échangeur de chaleur, le chlorure d'hydrogène gazeux étant partiellement condensé pour former un deuxième flux de condensat et un deuxième flux de gaz,
e) l'alimentation dudit deuxième flux de condensat dans ladite portion supérieure de ladite colonne pour fournir un reflux à ladite colonne,
f) l'alimentation dudit premier flux de condensat dans ladite colonne de distillation sous le point où ledit premier flux de gaz est alimenté,
g) l'alimentation dudit deuxième flux de gaz de l'étape d) dans ledit premier échangeur de chaleur comme agent de refroidissement,
h) la récupération du chlorure d'hydrogène gazeux purifié dudit premier échangeur de chaleur, et
i) l'alimentation desdits contaminants de la portion de fond de ladite colonne dans un récipient de récupération.

2. Procédé selon la revendication 1, où les contaminants contenus dans le flux de gaz sont des composés aromatiques chlorés.

3. Procédé selon la revendication 2, où le flux de gaz contient également un contaminant présentant une plage d'ébullition intermédiaire entre le point d'ébullition du chlorure d'hydrogène et le point d'ébullition du composé aromatique chloré.

4. Procédé selon la revendication 3, où ledit intermédiaire est le phosgène et ledit intermédiaire est éliminé de ladite colonne de distillation.

5. Procédé selon la revendication 1, où la température du gaz comprimé est réduite à une température de +10 à -25°C dans ledit premier échangeur de chaleur.

6. Procédé selon la revendication 1, où dans l'étape a), le gaz est comprimé à une pression de 5 à 30 bars absolus.

7. Procédé selon la revendication 1, où l'étape f) comprend
f1) l'alimentation dudit premier condensat dans un récipient (ou des récipients) de séparation pour piéger des solides et où un flux de solides et un flux de condensat de surverse sont formés,
f2) l'alimentation dudit flux de condensat de surverse dans ladite colonne de distillation en un point sous le point où le premier flux de gaz est alimenté.

8. Procédé selon la revendication 1, où l'étape e) comprend :
e1) l'alimentation dudit deuxième flux de condensat dans un ou plusieurs récipients de séparation utilisés pour piéger de quelconques solides présents et pour former un flux de solides et un troisième flux de condensat,
e2) l'alimentation dudit troisième flux de condensat dans ladite portion supérieure de ladite colonne pour fournir un reflux à ladite colonne.

9. Procédé selon la revendication 1, où l'étape i) comprend
i1) l'alimentation de liquide provenant de la portion de fond de ladite colonne dans un bouilleur pour générer des vapeurs de rectification pour la portion de fond de la colonne, et où le bouilleur chauffe ledit liquide à un flux thermique bas de manière à prévenir l'action de moussage et
i2) l'élimination d'un quelconque liquide restant du bouilleur dans un récipient de récupération pour l'enlèvement.

10. Procédé selon la revendication 9, où le bouilleur est conçu pour prévenir la formation de mousse et présente un flux thermique de 5674,5 kJ/(m²h) (500 BTU/h/ft²) à 226 980 kJ/(m²h) (20 000 BTU/h/ft²) comme limite inférieure et de 34 047 kJ/(m²h) (3000 BTU/h/ft²) à 340 470 kJ/(m²h) (30 000 BTU/h/ft²) comme limite supérieure.

11. Procédé selon la revendication 9, où une portion du liquide éliminé du bouilleur comprend du chlorure d'hydrogène et des contaminants et est vaporisée dans le flux de gaz alimenté dans le premier échangeur de chaleur.

12. Procédé selon la revendication 9, où 5 à 95% en poids du liquide alimenté dans ledit bouilleur sont évaporés.

13. Procédé selon la revendication 1, où le chlorure d'hydrogène gazeux purifié du premier échangeur de chaleur est purifié davantage par traitement avec du charbon actif.

14. Procédé de refroidissement et de distillation pour éliminer des contaminants présentant des points d'ébullition supérieurs au chlorure d'hydrogène à partir d'un gaz contenant du chlorure d'hydrogène comprenant :
a) la compression dudit gaz contenant du chlorure d'hydrogène,
b) le refroidissement du gaz comprimé résultant dans un premier échangeur de chaleur, résultant en un premier flux de condensat et en un premier flux de gaz, où ledit gaz comprimé est refroidi à une température suffisamment basse pour condenser partiellement lesdits contaminants et à une vitesse suffisamment basse pour prévenir la formation de brouillard,
c) l'alimentation dudit premier flux de gaz dudit premier échangeur de chaleur dans une colonne de distillation présentant une portion supérieure et une portion de fond en un point entre ladite portion supérieure et ladite portion de fond, pour provoquer un transfert de masse entre le liquide et le gaz et pour ainsi concentrer les contaminants dans la portion de fond de ladite colonne et le chlorure d'hydrogène gazeux dans la portion supérieure de ladite colonne,
d) l'alimentation dudit chlorure d'hydrogène gazeux provenant de ladite portion supérieure d'un côté d'un troisième échangeur de chaleur instantané et l'alimentation desdits contaminants provenant de la portion de fond de ladite colonne de l'autre côté dudit troisième échangeur de chaleur pour s'évaporer instantanément contre et refroidir le chlorure d'hydrogène gazeux passant à travers ledit troisième échangeur de chaleur, les flux suivants étant formés :
1) un deuxième flux de gaz contenant des contaminants,
2) un flux de contaminants,
3) un troisième flux de gaz refroidi, et
4) un deuxième flux de condensat,
e) l'alimentation dudit troisième flux de gaz dans un deuxième échangeur de chaleur, le chlorure d'hydrogène gazeux étant partiellement condensé pour former un troisième flux de condensat et un quatrième flux de gaz,
f) la combinaison dudit deuxième flux de condensation et dudit troisième flux de condensation et l'alimentation du flux combiné résultant dans ladite portion supérieure de ladite colonne pour fournir un reflux à ladite colonne,
g) l'alimentation dudit premier flux de condensat dans ladite colonne de distillation sous le point où ledit premier flux de gaz est alimenté,
h) l'alimentation dudit quatrième flux de gaz de l'étape d) dans ledit premier échangeur de chaleur comme agent de refroidissement, et
i) la récupération du chlorure d'hydrogène gazeux purifié dudit premier échangeur de chaleur.
